# EUROPEAN PATENT APPLICATION

(11) **EP 4 485 872 A1**
(43) Date of publication of application: **01.01.2025**
(21) Application number: 23778151.3
(22) Date of filing: 28.03.2023
(51) Int. Cl.: H04L 27/36

(54) **TERMINAL SCHEDULING METHOD AND APPARATUS, BASE STATION, AND MEDIUM**

(30) Priority: 31.03.2022 CN 202210335001
(71) Applicant: Huawei Technologies Co., Ltd., Shenzhen, Guangdong 518129 (CN)
(72) Inventor: FAN, Xinyue, Shenzhen, Guangdong 518129 (CN); LUO, Fei, Shenzhen, Guangdong 518129 (CN); SHAO, Leibing, Shenzhen, Guangdong 518129 (CN); BAO, Zhengqing, Shenzhen, Guangdong 518129 (CN)
(74) Representative: MERH-IP Matias Erny Reichl Hoffmann Patentanwälte PartG mbB
(86) International application number: PCT/CN2023/084230
(87) International publication number: WO 2023/185786

(57) **Abstract**

A terminal scheduling method and apparatus, a base station, and a medium are disclosed, to ensure that the base station can correctly decode an uplink signal of a terminal. The method includes: When a physical downlink control channel PDCCH allocated for downlink control information DCIO used to schedule a terminal device is located in common search space, and enable uplink 256QAM is configured for the terminal device, the base station determines that a modulation and coding scheme MCS index value in the DCIO is 0. The base station sends the DCIO to the terminal device through the PDCCH.

## Description

This application claims priority to Chinese Patent Application No. 202210335001.6, filed with the China National Intellectual Property Administration on March 31, 2022 and entitled "TERMINAL SCHEDULING METHOD AND APPARATUS, BASE STATION, AND MEDIUM", which is incorporated herein by reference in its entirety.

### TECHNICAL FIELD

This application relates to the field of communication technologies, and in particular, to a terminal scheduling method and apparatus, a base station, and a medium.

### BACKGROUND

In long term evolution (long term evolution, LTE) and new radio (new radio, NR), a base station sends downlink control information (downlink control information, DCIO) for uplink and downlink of a UE to a user equipment (user equipment, UE) through a physical downlink control channel (physical downlink control channel, PDCCH), to perform uplink and downlink scheduling on data of the UE.

DCIO for uplink notifies the UE of uplink allocated resources, a modulation and coding scheme (modulation and coding scheme, MCS) that needs to be used for uplink data transmission, and the like. The DCIO includes an MCS field, and a value corresponding to the MCS field is an MCS index value. After receiving the DCIO, the UE obtains the MCS index value in the DCIO, and determines a modulation order (modulation order), a transport block size (transport block size, TBS) index, a redundancy version (redundancy version, RV), and the like of uplink data by querying a table based on the MCS index value, to encode and modulate the uplink data, and sends the uplink data to the base station through a physical uplink shared channel (physical uplink shared channel, PUSCH). After receiving the uplink data, the base station determines a modulation order, a TBS index, a redundancy version, and the like of the uplink data by querying a table based on the MCS index value, to demodulate and decode the uplink data.

However, in some scenarios, the base station and the UE use different tables to query the modulation order, the TBS index, the redundancy version, and the like. As a result, the base station cannot demodulate and decode the uplink data. For example, when learning that the DCIO is in common search space of the PDCCH, the UE needs to use, according to a protocol, a modulation order, TBS index, and redundancy version table corresponding to the highest uplink 64QAM. However, some UEs do not perform implementation according to the protocol, and when the DCIO is in the common search space of the PDCCH, use a modulation order, TBS index, and redundancy version table corresponding to the highest uplink 256QAM, which is inconsistent with an implementation of the base station. As a result, a bit error occurs, and a plurality of bit errors cause a radio resource control (radio resource control, RRC) reconnection, affecting a terminal service.

### SUMMARY

This application provides a terminal scheduling method and apparatus, a base station, and a medium, to ensure that the base station can correctly demodulate and decode an uplink signal.

According to a first aspect, a terminal scheduling method is provided. The method is applied to a base station. The method includes: When a PDCCH allocated for DCIO used to schedule a terminal device is located in common search space, and enable uplink 256QAM is configured for the terminal device, after the base station determines that an MCS index value in the DCIO is 0, the base station sends the DCIO to the terminal device through the PDCCH. Therefore, it can be ensured that even if the base station and the terminal use different PDSCH modulation, TBS index, and redundancy version tables, uplink data can be successfully demodulated and decoded, and behavior of different terminal devices can be processed in a compatible manner.

In a possible implementation, before the base station determines that the modulation and coding scheme MCS index value in the DCIO is 0, the method further includes: The base station sends an RRC reconfiguration message to the terminal device. The base station receives an uplink scheduling request of the terminal device, where the uplink scheduling request indicates the base station to send the DCIO, so that the terminal device performs modulation and coding based on the DCIO, and uploads an RRC reconfiguration complete message corresponding to the RRC reconfiguration message.

In a possible implementation, the RRC reconfiguration message indicates the terminal device to add a secondary cell.

In a possible implementation, before the base station determines that the modulation and coding scheme MCS index value in the DCIO is 0, the method further includes: The base station obtains terminal capability information of the terminal device and channel quality of an uplink channel. The base station determines, based on the terminal capability information, that the terminal device supports uplink 256QAM, and that the channel quality satisfies a preset requirement. The base station configures enable uplink 256QAM for the terminal device.

According to a second aspect, a terminal scheduling apparatus is provided. The apparatus includes: a determining module, configured to: when a physical downlink control channel PDCCH allocated for downlink control information DCIO used to schedule a terminal device is located in common search space, and enable uplink 256QAM is configured for the terminal device, determine that a modulation and coding scheme MCS index value in the DCIO is 0; and a sending module, configured to send the DCIO to the terminal device through the PDCCH.

In a possible implementation, the apparatus further includes a receiving module. The sending module is further configured to send a radio resource control RRC reconfiguration message to the terminal device. The receiving module is configured to receive an uplink scheduling request of the terminal device, where the uplink scheduling request indicates a base station to send the DCIO, so that the terminal device performs modulation and coding based on the DCIO, and uploads an RRC reconfiguration complete message corresponding to the RRC reconfiguration message.

In a possible implementation, the RRC reconfiguration message indicates the terminal device to add a secondary cell.

In a possible implementation, the apparatus further includes an obtaining module and a configuring module. The obtaining module is configured to obtain terminal capability information of the terminal device and channel quality of an uplink channel. The determining module is further configured to determine, based on the terminal capability information, that the terminal device supports uplink 256QAM and that the channel quality satisfies a preset requirement. The configuring module is configured to configure enable uplink 256QAM for the terminal device.

According to a third aspect, a base station is provided. The base station includes a processor, a memory, and a transceiver. The transceiver is configured to communicate with a terminal device. The processor is coupled to the memory. The processor is configured to perform, based on instructions stored in the memory, the terminal scheduling method according to any one of the first aspect or the possible implementations of the first aspect.

According to a fourth aspect, a computer-readable storage medium is provided. The computer-readable storage medium includes instructions. When the computer-readable storage medium runs on a computer, the computer is enabled to perform the channel configuration method according to any one of the first aspect or the possible implementations of the first aspect.

### BRIEF DESCRIPTION OF DRAWINGS

FIG. 1 is a diagram of a structure of an embodiment of a communication system according to this application;
FIG. 2 is a schematic flowchart of a first embodiment of a terminal scheduling method according to this application;
FIG. 3 is a schematic flowchart of a second embodiment of a terminal scheduling method according to this application;
FIG. 4 is a diagram of a structure of an embodiment of a terminal scheduling apparatus according to this application; and
FIG. 5 is a diagram of a structure of an embodiment of a base station according to this application.

### DESCRIPTION OF EMBODIMENTS

This application provides a terminal scheduling method and apparatus, a base station, and a medium, to ensure that the base station can correctly demodulate and decode an uplink signal.

The terms used in this application are merely for the purpose of describing specific embodiments, but are not intended to limit this application. The terms "a", "the", and "this" of singular forms used in this application and the appended claims are also intended to include plural forms, unless otherwise specified in a context clearly. It should also be understood that, the term "and/or" used in this specification indicates and includes any or all possible combinations of one or more associated listed items. In addition, the character "/" in this specification generally indicates an "or" relationship between the associated objects.

It should be understood that, although terms such as first, second, and third may be used in this application to describe various packets/frames, requests, and terminal devices, these packets/frames, requests, and terminal devices should not be limited to these terms. These terms are merely used to distinguish between packets/frames, requests, and terminal devices. For example, without departing from the scope of this application, a first terminal device may also be referred to as a second terminal device. Similarly, a second terminal device may also be referred to as a first terminal device.

Depending on the context, for example, words "if" or "provided that" used herein may be explained as "while" or "when" or "in response to determining" or "in response to detection". Similarly, depending on the context, phrases "if determining" or "if detecting (a stated condition or event)" may be explained as "when determining" or "in response to determining" or "when detecting (the stated condition or event)" or "in response to detecting (the stated condition or event)".

The technical solutions of this application may be applied to various communication systems for data processing, for example, code division multiple access (code division multiple access, CDMA), time division multiple access (time division multiple access, TDMA), frequency division multiple access (frequency division multiple access, FDMA), orthogonal frequency division multiple access (orthogonal frequency division multiple access, OFDMA), single carrier frequency division multiple access (single carrier FDMA, SC-FDMA), and another system. The terms "system" and "network" may be substituted for each other. The CDMA system may implement wireless technologies such as universal terrestrial radio access (universal terrestrial radio access, UTRA) and CDMA2000. The UTRA may include a wideband CDMA (wideband CDMA, WCDMA) technology and another variant technology of the CDMA. The CDMA2000 may cover the interim standard (interim standard, IS) 2000 (IS-2000), the IS-95 standard, and the IS-856 standard. The TDMA system may implement wireless technologies such as a global system for mobile communications (global system for mobile communications, GSM). The OFDMA system may implement wireless technologies such as evolved universal terrestrial radio access (evolved UTRA, E-UTRA), ultra mobile broadband (ultra mobile broadband, UMB), IEEE 802.11 (Wi-Fi), IEEE 802.16 (WiMAX), IEEE 802.20, or Flash OFDMA. The UTRA corresponds to a UMTS, and the E-UTRA corresponds to an evolved version of the UMTS. A 3rd generation partnership project (3rd generation partnership project, 3GPP) uses a new version of the UMTS using E-UTRA in long term evolution (long term evolution, LTE) and various versions evolved based on the LTE. A 5th generation (5th Generation, 5G) communication system or new radio (new radio, NR) is a next generation communication system under research. In addition, the communication system may further be applicable to a future-oriented communication technology, and is applicable to the technical solutions provided in embodiments of the present invention. System architectures and service scenarios described in this application are intended to describe the technical solutions in this application more clearly, and do not constitute a limitation on the technical solutions provided in this application. A person of ordinary skill in the art may learn that, with evolution of network architectures and emergence of new service scenarios, the technical solutions provided in this application are also applicable to similar technical problems.

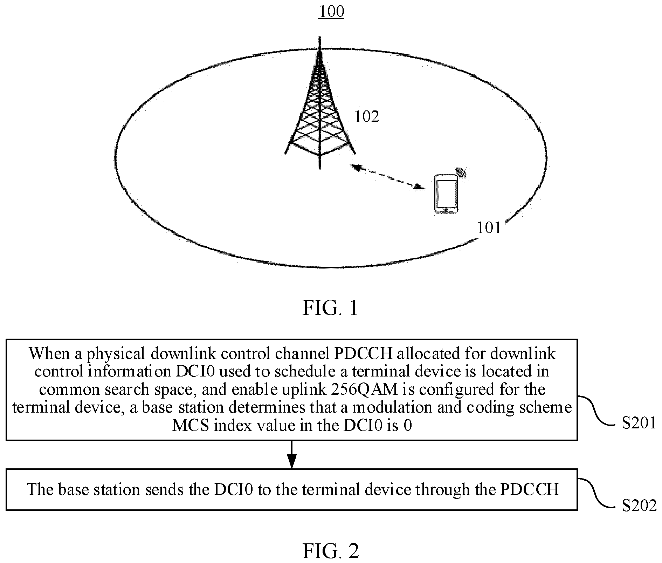

FIG. 1 is a diagram of a structure of an embodiment of a communication system according to this application. The communication system 100 includes a terminal device 101 and a base station 102. The terminal device 101 may be wirelessly connected to the base station 102.

The base station 102 may be any device having a wireless transceiver function, or a chip disposed in a device having a wireless transceiver function. The base station 102 includes but is not limited to an evolved base station eNodeB or eNB, a base station gNodeB or gNB in a 5th generation 5G communication system, a base station in a future communication system, an access node in a Wi-Fi system, a wireless relay node, a wireless backhaul node, and the like. The base station 102 may be a macro base station, a micro base station, a picocell base station, a small cell, a relay station, or the like. A plurality of base stations may support a network using the foregoing one or more technologies, or a future evolved network. A core network may support a network using the foregoing one or more technologies, or a future evolved network. The base station may include one or more co-site or non-co-site transmission reception points (transmission reception points, TRPs). Alternatively, the base station 102 may be a radio controller, a central unit (central unit, CU), a distributed unit (distributed unit, DU), or the like in a cloud radio access network (cloud radio access network, CRAN) scenario. The plurality of base stations 102 may be base stations of a same type, or may be base stations of different types. The base station 102 may communicate with the terminal device 101, or may communicate with the terminal device 101 through a relay station. The terminal device 101 may support communication with a plurality of base stations 102 using different technologies. For example, the terminal device 101 may support communication with a base station 102 supporting an LTE network, may support communication with a base station 102 supporting a 5G network, or may support dual connections to a base station supporting an LTE network and a base station 102 supporting a 5G network.

The terminal device 101 is also referred to as user equipment (user equipment, UE), a mobile station (mobile station, MS), a mobile terminal device (mobile terminal, MT), a terminal device, or the like, and is a device that provides voice and/or data connectivity for a user, or a chip disposed in a device, for example, a handheld device or a vehicle-mounted device having a wireless connection function. Currently, some examples of terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal device in industrial control (industrial control), a wireless terminal device in self driving (self driving), a wireless terminal device in remote medical surgery (remote medical surgery), a wireless terminal device in a smart grid (smart grid), a wireless terminal device in transportation safety (transportation safety), a wireless terminal device in a smart city (smart city), a wireless terminal device in a smart home (smart home), or the like.

A high-order modulation technology is introduced to increase an amount of transmitted data without increasing a transmission bandwidth. In a current application, an uplink high-order modulation technology with the highest order used in LTE and NR is 256 quadrature amplitude modulation (quadrature amplitude modulation, 256QAM). Compared with a theoretical gain of 64 quadrature amplitude modulation (quadrature amplitude modulation, 64QAM), a theoretical gain of the 256QAM is 33%. In a 256QAM scenario, each resource element (resource element, RE) can carry an eight-bit (bit) data amount. In comparison, in a 64QAM scenario, each RE can merely carry a six-bit data amount. Therefore, in a same RE scenario, a data amount that can be transmitted in the 256QAM is 33% higher than that in the 64QAM.

It is specified in 3GPP that both the base station and the terminal device store an uplink modulation, TBS index, and redundancy version mapping table (modulation, TBS index and redundancy version table for PUSCH). For brevity of subsequent description, the table is referred to as an uplink MCS-TBS index table for short. The uplink MCS-TBS index table includes an MCS index (an MCS index value), a modulation order, a TBS index, and a redundancy version. An R14 protocol defines two sets of uplink MCS-TBS index tables. Table 1 is an MCS-TBS index table that supports a highest uplink 64QAM modulation scheme, that is, an uplink 64QAM MCS-TBS index table; and Table 2 is an MCS-TBS index table that supports a highest uplink 256QAM modulation scheme, that is, a 256QAM MCS-TBS index table.

**Table 1 Uplink 64QAM MCS-TBS index table**

| MCS index | Modulation order | TBS index | Redundancy version |
|---|---|---|---|
| *I_{MCS}* | *Q^{'}ₘ* | *I_{TBS}* | *rv_{idx}* |
| 0 | 2 | 0 | 0 |
| 1 | 2 | 1 | 0 |
| 2 | 2 | 2 | 0 |
| 3 | 2 | 3 | 0 |
| 4 | 2 | 4 | 0 |
| 5 | 2 | 5 | 0 |
| 6 | 2 | 6 | 0 |
| 7 | 2 | 7 | 0 |
| 8 | 2 | 8 | 0 |
| 9 | 2 | 9 | 0 |
| 10 | 2 | 10 | 0 |
| 11 | 4 | 10 | 0 |
| 12 | 4 | 11 | 0 |
| 13 | 4 | 12 | 0 |
| 14 | 4 | 13 | 0 |
| 15 | 4 | 14 | 0 |
| 16 | 4 | 15 | 0 |
| 17 | 4 | 16 | 0 |
| 18 | 4 | 17 | 0 |
| 19 | 4 | 18 | 0 |
| 20 | 4 | 19 | 0 |
| 21 | 6 | 19 | 0 |
| 22 | 6 | 20 | 0 |
| 23 | 6 | 21 | 0 |
| 24 | 6 | 22 | 0 |
| 25 | 6 | 23 | 0 |
| 26 | 6 | 24 | 0 |
| 27 | 6 | 25 | 0 |
| 28 | 6 | 26 | 0 |
| 29 | reserved | | 1 |
| 30 | | | 2 |
| 31 | | | 3 |

**Table 2 Uplink 64QAM MCS-TBS index table**

| MCS index | Modulation order | TBS index | Redundancy version |
|---|---|---|---|
| *I_{MCS}* | *Q^{'}ₘ* | *I_{TBS}* | *rv_{idx}* |
| 0 | 2 | 0 | 0 |
| 1 | 2 | 2 | 0 |
| 2 | 2 | 4 | 0 |
| 3 | 2 | 6 | 0 |
| 4 | 2 | 8 | 0 |
| 5 | 2 | 10 | 0 |
| 6 | 4 | 11 | 0 |
| 7 | 4 | 12 | 0 |
| 8 | 4 | 13 | 0 |
| 9 | 4 | 14 | 0 |
| 10 | 4 | 16 | 0 |
| 11 | 4 | 17 | 0 |
| 12 | 4 | 18 | 0 |
| 13 | 4 | 19 | 0 |
| 14 | 6 | 20 | 0 |
| 15 | 6 | 21 | 0 |
| 16 | 6 | 22 | 0 |
| 17 | 6 | 23 | 0 |
| 18 | 6 | 24 | 0 |
| 19 | 6 | 25 | 0 |
| 20 | 6 | 27 | 0 |
| 21 | 6 | 28 | 0 |
| 22 | 6 | 29 | 0 |
| 23 | 8 | 30 | 0 |
| 24 | 8 | 31 | 0 |
| 25 | 8 | 32 | 0 |
| 26 | 8 | 32A | 0 |
| 27 | 8 | 33 | 0 |
| 28 | 8 | 34 | 0 |
| 29 | reserved | | 1 |
| 30 | | | 2 |
| 31 | | | 3 |

The base station side notifies the terminal device by sending a DCIO message including an MCS index, so that the terminal device selects a corresponding modulation order and TBS index from the uplink MCS-TBS index table based on the MCS index, to perform subsequent data processing. Specifically, in a process in which the base station performs uplink scheduling on the terminal device, the base station sends the DCIO message including the MCS index to the terminal device. The terminal device obtains the MCS index from the DCIO message, queries an MCS-TBS index table, determines a TBS index based on the MCS index, and queries a TBS table based on the uplink MCS-TBS index table, to determine a size of an uplink data bit block. Generally, a larger TBS index indicates a larger bit block.

When the terminal device supports the uplink 256QAM and channel quality satisfies a preset condition, to improve spectral efficiency, the base station sends, to the terminal device, an indication for configuring enable uplink 256QAM, in other words, the terminal device is allowed to modulate uplink data by using 256QAM.

After enable uplink 256QAM is configured for the terminal device, in some scenarios, the terminal device can obtain information such as the TBS index by using Table 2 based on the MCS index, and in some scenarios, the terminal device needs to obtain information such as the modulation order and the TBS index by using Table 1 based on the MCS index. For example, it is specified in the R14 protocol that, when DCIO used to schedule a PUSCH is located in terminal device-specific search space (UE specific search space, USSS) of a PDCCH, the terminal device determines information such as a modulation order and a TBS index by using an MCS index and Table 2, to modulate and encode uplink data. When DCIO used to schedule a PUSCH is located in common search space (common search space, CSS) of a PDCCH, the terminal device needs to determine information such as a modulation order and a TBS index by using an MCS index and Table 1, to modulate and encode uplink data.

In some cases, for example, when the base station configures carrier aggregation (carrier aggregation, CA) for the terminal device, when the base station performs cell handover, or when a terminal device-specific search space resource of the PDCCH is insufficient, the base station sends, in the common search space of the PDCCH, the DCIO used for uplink scheduling to the terminal device. In this case, according to the protocol, the terminal device needs to use the MCS index and Table 1 to determine the modulation order, the TBS index, and the like, to modulate and encode the uplink data, and the base station also uses the MCS index and Table 1 to determine the modulation order, the TBS index, and the like, to demodulate and decode the uplink data.

However, when the received DCIO is located in the common search space of the PDCCH, some terminal devices do not use Table 1 to query the modulation order, the TBS index, and the like according to the protocol, but still use Table 2 to query the modulation order, the TBS index, and the like. However, the base station uses Table 1 to query the modulation order, the TBS index, and the like. As a result, the base station cannot demodulate and decode the uplink data. For example, when the MCS index is 28, the base station determines, based on Table 1, that the modulation order is 6 (corresponding to 64QAM) and the TBS index is 26, while the terminal device determines, based on Table 2, that the modulation order is 8 (corresponding to 256QAM) and the TBS index is 34. Modulation schemes and the TBSs used by the base station and the terminal device are inconsistent, consequently, a bit error occurs.

To resolve the foregoing technical problem, this application provides the following method, to ensure that the base station can still decode the uplink data even if the MCS-TBS index tables used by the base station and the terminal device are inconsistent.

FIG. 2 is a schematic flowchart of a first embodiment of a terminal scheduling method according to this application. An execution body in this embodiment is a base station. This embodiment includes the following steps.

S201: When a physical downlink control channel PDCCH allocated for downlink control information DCIO used to schedule a terminal device is located in common search space, and enable uplink 256QAM is configured for the terminal device, the base station determines that a modulation and coding scheme MCS index value in the DCIO is 0.

The DCIO in this embodiment is used for scheduling of a PUSCH of the terminal device, to allocate a time-frequency resource, configure an MCS index, and the like for the PUSCH of the terminal device. The DCIO is sent to a user equipment through the PDCCH. A PDCCH resource is in a unit of a control channel element (control channel element, CCE). To reduce a calculation amount of blind detection performed by the user equipment, PDCCH CCEs are divided into terminal-specific search space and common search space. Data transmitted in the common search space generally includes messages such as system information, a random access response (random access response, RAR), and paging, and each terminal device needs to search in the common search space. The terminal-specific search space is used for transmission of control information of a specific terminal device, in other words, the terminal-specific search space is used for transmission of DCI used to schedule the specific terminal device. ADCI format (DCI format) that may be used in the common search space is DCI0/1A/3/3A/1C, where the DCIO is a PUSCH-related DCI type. Therefore, in this embodiment, the DCI format is the DCIO.

When a terminal-specific search space resource is insufficient, or when the base station delivers an RRC reconfiguration message (RRC connection reconfiguration) to the terminal device and does not receive a corresponding RRC reconfiguration complete message (RRC connection reconfiguration complete) sent by the terminal device, or the like, the base station may send the DCIO of the terminal device to the terminal device by using the CCE in the common search space.

Enable uplink 256QAM is configured by the base station for the terminal device based on capability information of the terminal device and uplink channel quality.

Specifically, after the base station establishes an RRC connection to the terminal device, the base station sends a terminal capability enquiry request (UE capability enquiry) to the terminal device, and the terminal device reports corresponding terminal capability information (UE capability information) to the base station based on the terminal capability enquiry request. The terminal capability information includes a terminal device-category (UE-category). The base station can determine, based on the terminal device-category, whether the terminal device supports the uplink 256QAM. For example, in an R14 protocol, if an uplink terminal device-category is any integer value from 16 to 20, it may be determined that the terminal device supports the uplink 256QAM.

Further, the base station obtains channel quality of an uplink channel of the terminal device, and determines whether the channel quality of the uplink channel satisfies a preset condition. The channel quality of the uplink channel specifically includes, for example, a signal to interference plus noise ratio (signal to interference plus noise ratio, SINR). When the SINR is greater than a threshold, the base station may determine that the channel quality of the uplink channel satisfies the preset condition.

When the terminal device supports the uplink 256QAM, and the channel quality of the uplink channel satisfies the preset condition, the base station configures enable uplink 256QAM for the terminal device.

When the base station determines that the PDCCH CCE allocated for the DCIO used to schedule the terminal device is located in the common search space, and enable uplink 256QAM is configured for the terminal device, to avoid a modulation and decoding failure of the base station caused by inconsistency between modulation schemes and TBSs because the base station and the terminal device use different MCS-TBS index tables, the base station determines that the MCS index value in the DCIO is 0. As shown in Table 1 and Table 2, when the MCS index value is 0, the modulation order and the TBS index value in Table 1 are the same as those in Table 2. Therefore, even if the base station performs enquiry by using Table 1, and the terminal device performs enquiry by using Table 2, a same modulation order and a same TBS index value can be obtained, so that the base station can successfully demodulate uplink data of the terminal device.

S202: The base station sends the DCIO to the terminal device through the PDCCH.

After determining the MCS index value and the like in the DCIO, the base station sends the DCIO to the terminal device by using the PDCCH CCE in the common search space. Therefore, the terminal device determines, based on the DCIO, that the modulation order is 0, the TBS index value is 0, and a redundancy version is 0, and performs operations such as encoding and modulation on the uplink data to obtain an uplink signal. The terminal device sends the uplink signal corresponding to the uplink data to the base station. After receiving the uplink signal, the base station obtains, based on the MCS index value and Table 1, that the modulation order is 0, the TBS index value is 0, and the redundancy version is 0, so that the uplink signal can be successfully demodulated and decoded, to obtain the uplink data.

The first embodiment of the terminal scheduling method may be applied to a plurality of scenarios that satisfy the following two conditions: The PDCCH resource allocated for the DCIO used for the scheduling of the PUSCH is located in the common search space, and enable uplink 256QAM is configured for the terminal device. A specific application scenario is, for example, that the base station configures carrier aggregation for the terminal device.

In an LTE system and an NR system, a carrier aggregation technology is selected to support a wider bandwidth to satisfy a rate requirement of a user. The carrier aggregation technology may also be referred to as a spectrum aggregation (spectrum aggregation) technology or a bandwidth extension (bandwidth extension) technology sometimes. In the carrier aggregation, spectra of at least two component carriers (component carriers, CCs) are aggregated to obtain a wider transmission bandwidth. The at least two CCs may be simultaneously scheduled to one terminal device for use, and are used for transmission of an uplink or downlink service of the terminal device.

One of the at least two CCs is a primary component carrier (primary component carrier, PCC), and the other is a secondary component carrier (secondary component carrier, SCC). A cell corresponding to the primary component carrier is a primary cell (primary cell, PCell), and a cell corresponding to the secondary component carrier is a secondary cell (secondary cell, SCell).

The PCell is a cell in which the terminal device establishes an initial connection to the base station, or a cell in which the terminal device performs RRC connection reestablishment. The PCell is responsible for RRC communication with the terminal device, to carry signaling and manage the secondary cell. After an initial security activation procedure (initial security activation procedure), the SCell is added/modified/released by the base station for the terminal device by using the RRC reconfiguration message.

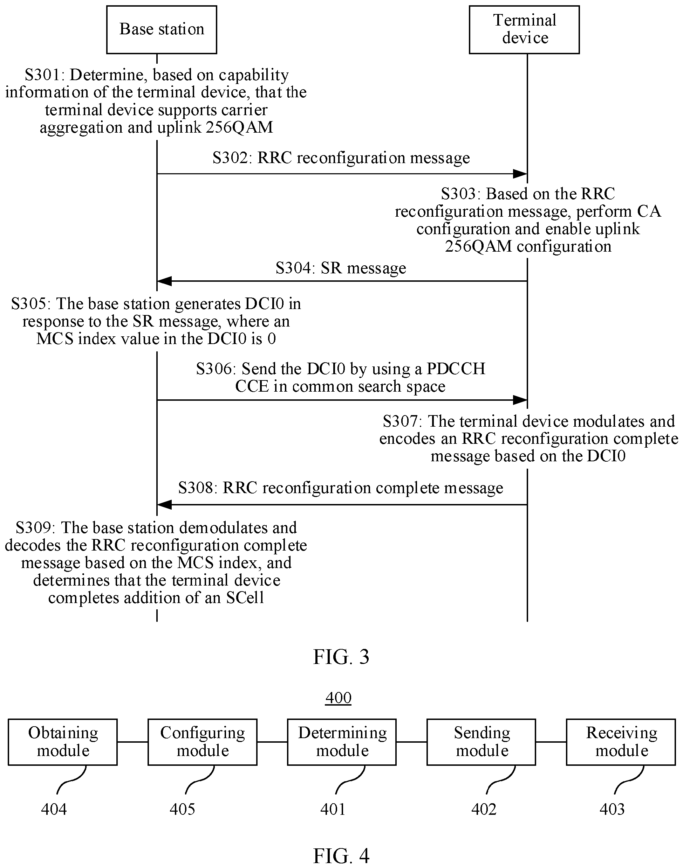

Specifically, FIG. 3 is a schematic flowchart of a second embodiment of a terminal scheduling method according to this application. This embodiment includes the following steps.

S301: A base station determines, based on capability information of a terminal device, that the terminal device supports carrier aggregation and uplink 256QAM.

After the base station establishes an RRC connection to the terminal device, the base station sends a terminal capability enquiry request (UE capability enquiry) to the terminal device, and the terminal device reports corresponding terminal capability information (UE capability information) to the base station based on the terminal capability enquiry request. The terminal capability information includes an uplink terminal device-category (UE-category). The base station can determine, based on the uplink terminal device-category, whether the terminal device supports the uplink 256QAM. For example, in an R14 protocol, if an uplink terminal device-category is any integer value from 16 to 20, it may be determined that the terminal device supports the uplink 256QAM. Further, the base station obtains channel quality of an uplink channel of the terminal device, and determines whether the channel quality of the uplink channel satisfies a preset condition. The channel quality of the uplink channel specifically includes, for example, a signal to interference plus noise ratio (signal to interference plus noise ratio, SINR). When the SINR is greater than a threshold, the base station may determine that the channel quality of the uplink channel satisfies the preset condition.

The base station may further determine, based on the terminal capability information, whether the terminal device has a CA capability, whether the terminal device supports a CA band combination, and the like. Specifically, for example, the base station performs determining based on information elements such as UE-category, supported band information (supported band EUTRA), supported band combination (supported band combination-r10), supported intra-band contiguous maximum aggregated bandwidth and maximum quantity of carriers (ca-bandwidthclassDL-r10), and supported bandwidth combination (supported bandwidth combinationSet-r10) in the terminal capability information. For example, when a value of the UE-category of the terminal device is greater than or equal to 6, it may be determined that the terminal device supports the CA.

S302: The base station sends an RRC reconfiguration message to the terminal device.

The base station sends the RRC reconfiguration message to the terminal device when determining that the terminal device supports the uplink 256QAM, the channel quality of the uplink channel of the terminal device satisfies the preset condition, and the terminal device supports the CA.

The RRC reconfiguration message indicates the terminal device to configure an SCell, and indicates enable uplink 256QAM to the terminal device. For example, the enable uplink 256QAM is configured for the terminal device by using an enable256qam-r14 information element in the RRC reconfiguration message.

S303: Based on the RRC reconfiguration message, the terminal device performs CA configuration and enable uplink 256QAM configuration.

S304: The terminal device sends an SR message to the base station.

An uplink scheduling request (scheduling request, SR) message indicates the base station to allocate a time-frequency resource, configure a modulation scheme, and the like to the terminal device, so that the terminal device can send, to the base station based on the time-frequency resource and the modulation scheme, an RRC reconfiguration complete message corresponding to the RRC reconfiguration message.

S305: The base station generates DCIO in response to the SR message, where an MCS index value in the DCIO is 0.

Only after receiving the RRC reconfiguration message, the base station can determine that the terminal device has completed addition of the SCell. Before this, the base station cannot determine whether the terminal device has been successfully configured, and a DCI format of terminal-specific search space needs to be switched before and after the configuration succeeds. Therefore, to avoid inconsistency between DCI formats used by the base station and a user equipment, and ensure that DCI can be identified by the user equipment, the base station sends, to the terminal device by using a PDCCH CCE in common search space, the DCI used for scheduling of a PUSCH, where a format of the DCI is the DCIO. Because a format size of the DCIO is fixed, a terminal may identify the DCIO, and the scheduling is not interrupted.

The DCIO includes the time-frequency resource and the MCS index value. The MCS index value is 0. When the base station determines that the PDCCH allocated for the DCIO used to schedule the terminal device is located in the common search space, and enable uplink 256QAM is configured for the terminal device, to avoid a modulation and decoding failure of the base station caused by inconsistency between modulation schemes and TBSs because the base station and the terminal device use different MCS-TBS index tables, the base station determines that the MCS index value in the DCIO is 0.

S306: The base station sends the DCIO to the terminal device by using the PDCCH CCE in the common search space.

S307: The terminal device modulates and encodes the RRC reconfiguration complete message based on the DCIO.

The terminal device queries, based on the DCIO, Table 1 or Table 2 based on the MCS index value which is 0, to obtain that a modulation order is 0, a TBS index value is 0, and a redundancy version is 0, and modulates and encodes the RRC reconfiguration complete message based on the modulation order, the TBS index value, and the redundancy version.

S308: The terminal device sends the RRC reconfiguration complete message to the base station.

S309: The base station demodulates and decodes the RRC reconfiguration complete message based on the MCS index, and determines that the terminal device completes the addition of the SCell.

The MCS index value which is 0 is used to query Table 1 or Table 2 to obtain that the modulation order is 0, the TBS index value is 0, and the redundancy version is 0, and the RRC reconfiguration complete message is demodulated and decoded based on the modulation order, the TBS index value, and the redundancy version. Because the modulation order, the TBS index value, and the redundancy version used by the base station are consistent with those used by the terminal device, the base station can successfully demodulate and decode the RRC reconfiguration complete message, to confirm that the terminal device completes the addition of the SCell. This can avoid a problem that a CA configuration of the terminal device for which enable uplink 256QAM is configured fails because the base station cannot demodulate and decode the RRC reconfiguration complete message, causing re-access.

FIG. 4 is a diagram of a structure of an embodiment of a terminal scheduling apparatus according to this application. The apparatus 400 includes:
a determining module 401, configured to: when a physical downlink control channel PDCCH allocated for downlink control information DCIO used to schedule a terminal device is located in common search space, and enable uplink 256QAM is configured for the terminal device, determine that a modulation and coding scheme MCS index value in the DCIO is 0; and
a sending module 402, configured to send the DCIO to the terminal device through the PDCCH.

In a possible implementation, the apparatus further includes a receiving module 403. The sending module 402 is further configured to send a radio resource control RRC reconfiguration message to the terminal device. The receiving module 403 is configured to receive an uplink scheduling request of the terminal device, where the uplink scheduling request indicates a base station to send the DCIO, so that the terminal device performs modulation and coding based on the DCIO, and uploads an RRC reconfiguration complete message corresponding to the RRC reconfiguration message.

In a possible implementation, the RRC reconfiguration message indicates the terminal device to add a secondary cell.

In a possible implementation, the apparatus further includes an obtaining module 404 and a configuring module 405. The obtaining module 404 is configured to obtain terminal capability information of the terminal device and channel quality of an uplink channel. The determining module 401 is further configured to determine, based on the terminal capability information, that the terminal device supports uplink 256QAM and that the channel quality satisfies a preset requirement. The configuring module 405 is configured to configure enable uplink 256QAM for the terminal device.

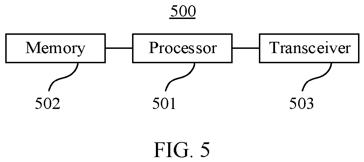

FIG. 5 is a diagram of a structure of an embodiment of a base station according to this application. The base station 500 includes a processor 501, a memory 502, and a transceiver 503. The transceiver 503 is configured to communicate with a terminal device. The processor 501 is coupled to the memory 502, and the processor 501 is configured to perform, based on instructions stored in the memory 502, the terminal scheduling method in FIG. 2.

This application further provides a computer-readable storage medium. The computer-readable storage medium stores a computer program. When the computer program is executed by a computer, the channel configuration method procedure in any one of the foregoing method embodiments is implemented.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the described apparatus embodiments are merely examples. For example, division into the units is merely logical function division and may be other division in actual implementations. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, all or some of the technical solutions of this application may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, read-only memory), a random access memory (RAM, random access memory), a magnetic disk, or an optical disc.

## Claims

1. A terminal scheduling method, wherein the method comprises:
when a physical downlink control channel PDCCH allocated for downlink control information DCIO used to schedule a terminal device is located in common search space, and enable uplink 256QAM is configured for the terminal device, determining, by a base station, that a modulation and coding scheme MCS index value in the DCIO is 0; and
sending, by the base station, the DCIO to the terminal device through the PDCCH.

2. The method according to claim 1, wherein before the determining, by a base station, that a modulation and coding scheme MCS index value in the DCIO is 0, the method further comprises:
sending, by the base station, a radio resource control RRC reconfiguration message to the terminal device; and
receiving, by the base station, an uplink scheduling request of the terminal device, wherein the uplink scheduling request indicates the base station to send the DCIO, so that the terminal device performs modulation and coding based on the DCIO, and uploads an RRC reconfiguration complete message corresponding to the RRC reconfiguration message.

3. The method according to claim 2, wherein the RRC reconfiguration message indicates the terminal device to add a secondary cell.

4. The method according to any one of claims 1 to 3, wherein before the determining, by a base station, that a modulation and coding scheme MCS index value in the DCIO is 0, the method further comprises:
obtaining, by the base station, terminal capability information of the terminal device and channel quality of an uplink channel;
determining, by the base station based on the terminal capability information, that the terminal device supports uplink 256QAM and that the channel quality satisfies a preset requirement; and
configuring, by the base station, enable uplink 256QAM for the terminal device.

5. A terminal scheduling apparatus, wherein the apparatus comprises:
a determining module, configured to: when a physical downlink control channel PDCCH allocated for downlink control information DCIO used to schedule a terminal device is located in common search space, and enable uplink 256QAM is configured for the terminal device, determine that a modulation and coding scheme MCS index value in the DCIO is 0; and
a sending module, configured to send the DCIO to the terminal device through the PDCCH.

6. The apparatus according to claim 5, wherein the apparatus further comprises a receiving module, wherein
the sending module is further configured to send a radio resource control RRC reconfiguration message to the terminal device; and
the receiving module is configured to receive an uplink scheduling request of the terminal device, wherein the uplink scheduling request indicates a base station to send the DCIO, so that the terminal device performs modulation and coding based on the DCIO, and uploads an RRC reconfiguration complete message corresponding to the RRC reconfiguration message.

7. The apparatus according to claim 6, wherein the RRC reconfiguration message indicates the terminal device to add a secondary cell.

8. The apparatus according to any one of claims 5 to 7, wherein the apparatus further comprises an obtaining module and a configuring module, wherein
the obtaining module is configured to obtain terminal capability information of the terminal device and channel quality of an uplink channel;
the determining module is further configured to determine, based on the terminal capability information, that the terminal device supports uplink 256QAM and that the channel quality satisfies a preset requirement; and
the configuring module is configured to configure enable uplink 256QAM for the terminal device.

9. Abase station, wherein the base station comprises a processor, a memory, and a transceiver, the transceiver is configured to communicate with a terminal device, the processor is coupled to the memory, and the processor is configured to perform, based on instructions stored in the memory, the terminal scheduling method according to any one of claims 1 to 4.

10. A computer-readable storage medium, comprising instructions, wherein when the computer-readable storage medium runs on a computer, the computer is enabled to perform the terminal scheduling method according to any one of claims 1 to 4.
